# EUROPEAN PATENT APPLICATION

(11) **EP 4 607 868 A1**
(43) Date of publication of application: **27.08.2025**
(21) Application number: 22962496.0
(22) Date of filing: 21.10.2022
(51) Int. Cl.: H04L 27/00

(54) **CHANNEL STATE INFORMATION FEEDBACK METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Hersina, Günter
(86) International application number: PCT/CN2022/126846
(87) International publication number: WO 2024/082315

(57) **Abstract**

The present disclosure relates to a channel state information feedback method, apparatus and device, and a storage medium. The method comprises: receiving configuration information sent by a network device, and determining at least one channel measurement resource (CMR) on the basis of the configuration information, wherein a target CMR in the at least one CMR comprises a plurality of non-zero-power channel state information reference signals (NZP CSI-RSs); and sending CSI to the network device, the CSI being obtained by performing channel measurement by a terminal on the basis of the target CMR. Parameter information corresponding to the at least one NZP CSI-RS measured on the basis of a CMR is fed back in the CSI sent to the network device, so that when the terminal communicates with a multi-TRP, the signaling overhead of CSI reporting can be reduced.

## Description

### TECHNICAL FIELD

The present disclosure relates to the field of communication technologies, and in particular to a method, an apparatus, and a device for channel state information feedback, and a storage medium.

### BACKGROUND

Currently, a network device may use multiple transmission and receiving points (TRPs) to provide a service for a terminal. Each TRP may correspond to a non-zero-power (NZP) channel state information reference signal (CSI-RS).

However, when the terminal does not select a certain NZP CSI-RS, that is, the terminal does not select the TRP corresponding to the NZP CSI-RS, then how the terminal provides feedback to the network device and how to report channel state information (CSI) corresponding the NZP CSI-RS to the network device are problems that need to be solved.

### SUMMARY

In order to overcome the problems existing in the related art, the present disclosure provides a method, an apparatus, and a device for channel state information feedback, and a storage medium.

According to a first aspect of embodiments of the present disclosure, a method for channel state information feedback is provided. The method is performed by a terminal, an includes: receiving configuration information sent by a network device, and determining at least one channel measurement resource (CMR) based on the configuration information, in which a target CMR of the at least one CMR includes a plurality of non-zero-power channel state information reference signals (NZP CSI-RSs); and sending channel state information (CSI) to the network device, the CSI being obtained by the terminal by performing channel measurement based on the target CMR.

According to a second aspect of embodiments of the present disclosure, a method for channel state information feedback is provided. The method is performed by a network device, and includes: sending configuration information to a terminal, the configuration information being used by the terminal to determine at least one CMR, in which a target CMR of the at least one CMR includes a plurality of NZP CSI-RSs; and receiving CSI sent by the terminal, the CSI being obtained by the terminal by performing channel measurement based on the target CMR.

According to a third aspect of embodiments of the present disclosure, an apparatus for channel state information feedback is provided. The apparatus is configured in a terminal and includes: a receiving module, configured to receive configuration information sent by a network device; a determining module, configured to determine at least one CMR based on the configuration information, in which a target CMR of at least one CMR includes a plurality of NZP CSI-RSs; and a sending module, configured to send CSI to the network device, the CSI being obtained by the terminal by performing channel measurement based on the target CMR.

According to the fourth aspect of embodiments of the present disclosure, an apparatus for channel state information feedback is provided. The apparatus is configured in a network device and includes: a sending module, configured to send configuration information to a terminal, the configuration information being used by the terminal to determine at least one CMR, in which a target CMR of the at least one CMR includes a plurality of NZP CSI-RSs; and a receiving module, configured to receive CSI sent by the terminal, the CSI being obtained by the terminal by performing channel measurement based on the target CMR.

According to a fifth aspect of embodiments of the present disclosure, a device for channel state information feedback is provided. The device includes: a processor; and a memory for storing instructions executable by the processor. The processor is configured to perform any one of the methods in the first aspect.

According to a sixth aspect of embodiments of the present disclosure, a device for channel state information feedback is provided. The device includes: a processor; a memory for storing instructions executable by the processor. The processor is configured to perform any one of the methods in the second aspect.

According to a seventh aspect of embodiments of the present disclosure, a storage medium is provided, in which instructions are stored. When the instructions in the storage medium are executed by a processor of a terminal, the terminal is enabled to perform any one of the methods in the first aspect.

According to an eighth aspect of embodiments of the present disclosure, a storage medium is provided, in which instructions are stored. When the instructions in the storage medium are executed by a processor of a network device, the network device is enabled to perform any one of the methods in the second aspect.

According to a ninth aspect of embodiments of the present disclosure, a communication system is provided. The system includes a terminal and a network device. The terminal is configured to perform any one of the methods in the first aspect, and the network device is configured to perform any one of the methods in the second aspect.

The technical solution provided by the embodiments of the present disclosure may include the following beneficial effects: the parameter information corresponding to the at least one NZP CSI-RS, that is measured based on the CMR, is fed back in the channel state information sent to the network device, so that when the terminal communicates with the multi-TRP, the signaling overhead of the CSI reporting can be reduced.

It is to be understood that the foregoing general descriptions and the following detailed descriptions are exemplary and explanatory only, and are not restrictive of the present disclosure.

### BRIEF DESCRIPTION OF THE DRAWINGS

The accompanying drawings, that are incorporated in and constitute a part of the specification, illustrate embodiments consistent with the present disclosure, and together with the description, serve to explain the principles of the present disclosure.
Fig. 1 is a schematic diagram of a wireless communication system according to an exemplary embodiment.
Fig. 2 is a flow chart of a method for channel state information feedback according to an exemplary embodiment.
Fig. 3 is a flow chart of another method for channel state information feedback according to an exemplary embodiment.
Fig. 4 is a schematic diagram of an apparatus for channel state information feedback according to an exemplary embodiment.
Fig. 5 is a schematic diagram of another apparatus for channel state information feedback according to an exemplary embodiment.
Fig. 6 is a schematic diagram of a device for channel state information feedback according to an exemplary embodiment.
Fig. 7 is a schematic diagram of another device for channel state information feedback according to an exemplary embodiment.

### DETAILED DESCRIPTION

Exemplary embodiments will be described in detail here, examples of which are shown in the accompanying drawings. When the following description refers to the drawings, unless otherwise indicated, the same numbers in different drawings represent the same or similar elements. Implementations described in the following exemplary embodiments do not represent all implementations consistent with the present disclosure.

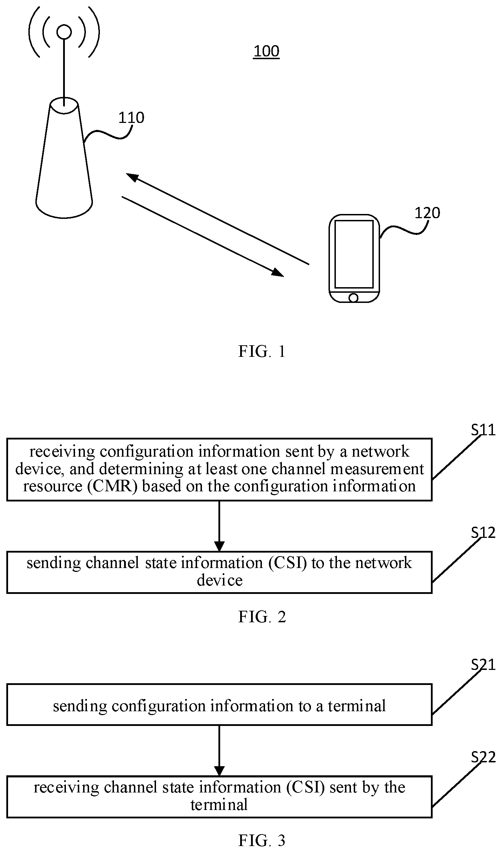

The communication method involved in the present disclosure is applicable to a wireless communication system 100 shown in Fig. 1. The network system may include a network device 110 and a terminal 120. It can be understood that the wireless communication system shown in Fig. 1 is for schematic illustration, and the wireless communication system may also include other network devices, for example, a core network device, a wireless relay device, and a wireless backhaul device, which are not shown in Fig. 1. The embodiments of the present disclosure do not limit the number of network devices and the number of terminals included in the wireless communication system.

It can be further understood that the wireless communication system of the embodiments of the present disclosure is a network that provides wireless communication functions. The wireless communication system may adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), Carrier Sense Multiple Access with Collision Avoidance. According to the capacity, rate, delay and other factors of different networks, the network can be divided into a 2-Generation (2G) network, a 3G network, a 4G network or a future evolution network, such as a fifth generation wireless communication system (5G) network, and the 5G network may also be called a new wireless network (NR). For the convenience of description, the present disclosure sometimes refers to the wireless communication network as the network.

Furthermore, the network device 110 involved in the present disclosure may also be referred to as a wireless access network device. The wireless access network device may be: a base station, an evolved Node B (eNB), a home base station, an access point (AP) in a wireless fidelity (WIFI) system, a wireless relay node, a wireless backhaul node, a transmission point (TP) or a TRP, etc. The wireless access network device may also be a gNB in an NR system, or it may also be a component or a part of a device constituting a base station, etc. For a vehicle-to-everything (V2X) communication system, the network device may also be a vehicle-mounted device. It should be understood that in the embodiments of the present disclosure, the specific technology and specific device form adopted by the network device are not limited.

Furthermore, the terminal 120 involved in the present disclosure may also be referred to as a terminal device, a user equipment (UE), a mobile station (MS), a mobile terminal (MT), etc., which is a device that provides voice and/or data connectivity to a user. For example, the terminal may be a handheld device with a wireless connection function, a vehicle-mounted device, etc. At present, some examples of the terminal are: a mobile phone, a pocket personal computer (PPC), a handheld computer, a personal digital assistant (PDA), a laptop computer, a tablet computer, a wearable device, or a vehicle-mounted device, etc. In addition, for a V2X communication system, the terminal device may also be a vehicle-mounted device. It should be understood that in the embodiments of the present disclosure, the specific technology and specific device form adopted by the terminal are not limited.

In the embodiments of the present disclosure, the network device 110 and the terminal 120 may use any feasible wireless communication technology to achieve mutual data transmission. A transmission channel corresponding to data sent by the network device 110 to the terminal 120 is called a downlink channel (DL), and a transmission channel corresponding to data sent by the terminal 120 to the network device 110 is called an uplink channel (UL). It can be understood that the network device involved in the embodiments of the present disclosure may be a base station. Of course, the network device may also be any other possible network device, and the terminal may be any possible terminal, which is not limited by the present disclosure.

At present, in related art, it is discussed that a network device uses multi-TRP to provide a service for a terminal. For example, the network device uses four TRPs to provide the service for the terminal. In this case, whether a TRP used for coherent joint transmission (CJT) is configured by the network device or selected by the terminal is an issue currently under discussion. The above-mentioned multi-TRP may belong to a service cell and/or a neighboring cell of the terminal.

Each TRP may correspond to a non-zero-power (NZP) channel state information reference signal (CSI-RS). That is to say, the issue currently under discussion can be considered as whether NZP CSI-RSs used for CSI feedback is configured by the network device or selected by the terminal.

In some schemes for selection by the terminal, for example, the network device configures 4 NZP CSI-RS, if the terminal does not select a certain NZP CSI-RS, it means that the terminal does not select the TRP corresponding to the NZP CSI-RS. Then how the terminal informs the network device which NZP CSI-RSs it has selected, and how the CSI corresponding to the NZP CSI-RS is indicated, is a problem that needs to be solved at present.

Therefore, the present disclosure provides a method, an apparatus and a device for channel state information feedback, and a storage medium. Parameter information corresponding to at least one NZP CSI-RS, that is measured based on a channel measurement resource, is fed back in channel state information sent to the network device, so that when the terminal communicates with the multi-TRP, the signaling overhead of CSI reporting can be reduced.

FIG. 2 is a flow chart of a method for channel state information feedback according to an exemplary embodiment. As shown in FIG. 2, the method is applied to a terminal, and may include the following steps.

In step S11, configuration information sent by a network device is received, and at least one channel measurement resource (CMR) is determined based on the configuration information.

In some embodiments, the terminal receives the configuration information sent by the network device. The terminal may determine the at least one CMR based on the received configuration information. A target CMR in the at least one CMR includes a plurality of NZP CSI-RSs.

It can be understood that the target CMR can be considered as the CMR for the terminal to perform channel measurement. One CMR corresponds to one CSI. In one CMR, different TRPs may respectively correspond to different NZP CSI-RSs.

In some embodiments, the configuration information received by the terminal may be carried in a radio resource control (RRC) signaling and/or a medium access control element (MAC CE).

In step S12, CSI is sent to the network device.

In some embodiments, the terminal may send the CSI to the network device, in which the CSI is obtained by the terminal by performing channel measurement based on the target CMR.

It can be understood that the terminal may perform measurement based on at least one NZP CSI-RS among the plurality of NZP CSI-RSs included in the target CMR to obtain the CSI.

In some embodiments, the CSI may also be referred to as a CSI report.

In the embodiments of the present disclosure, the parameter information corresponding to the at least one NZP CSI-RS, that is measured based on the CMR, is fed back in the channel state information sent to the network device, so that when the terminal communicates with the multi-TRP, the signaling overhead of the CSI reporting can be reduced.

In the method for channel state information feedback provided by the embodiments of the present disclosure, the CSI includes: first information and second information. The first information and the second information are different indication information corresponding to the NZP CSI-RSs in the target CMR. The first information includes the target NZP CSI-RS indication information. The target NZP CSI-RS indication information is used to indicate that an NZP CSI-RS is a target NZP CSI-RS or a non-target NZP CSI-RS, and the one or more target NZP CSI-RSs are part or all of the plurality of NZP CSI-RSs.

In some embodiments, the CSI sent by the terminal to the network device may include the first information and the second information. For example, the CSI report may include two parts, namely part 1 and part 2. Part 1 may correspond to the first information, and part 2 may correspond to the second information. The first information and the second information are different indication information corresponding to the NZP CSI-RSs in the target CMR. It can be understood that the first information and the second information are both indication information for describing the NZP CSI-RSs in the target CMR, and the first information and the second information are different indication information.

In some embodiments, the first information may include the target NZP CSI-RS indication information. The target NZP CSI-RS indication information may be used to indicate that an NZP CSI-RS is a target NZP CSI-RS or a non-target NZP CSI-RS. The one or more target NZP CSI-RSs are part or all of the plurality of NZP CSI-RSs.

It can be understood that the target NZP CSI-RS is an NZP CSI-RS with channel quality meeting conditions and is determined by the terminal by performing channel measurement. That is, the terminal determines that the channel quality of such NZP CSI-RS is good and can communicate with a TRP corresponding to such NZP CSI-RS. The non-target NZP CSI-RS is an NZP CSI-RS with channel quality not meeting the conditions. It may be considered that the channel quality of such NZP CSI-RS is poor, which is not conducive to the terminal for communication.

In the embodiments of the present disclosure, the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, a size of an indication field corresponding to the second information is determined based on the first information.

In some embodiments, the size of the indication field corresponding to the second information may be determined based on the first information.

For example, the size of part 2 of the CSI is determined based on the information in part 1. The size of part 2 indicates a numeric count of bits occupied by part 2 of the CSI, such as 8 bits or 16 bits.

In some embodiments, the size of the indication field corresponding to the first information may be a fixed value, such as a pre-defined value or a default size specified by a protocol.

The present disclosure dynamically adjusts the size of different parts of the CSI, which is beneficial to feedback the parameter information corresponding to at least one NZP CSI-RS, so that when the terminal communicates with the multi-TRP, the signaling overhead of the CSI reporting can be reduced.

In the method for channel state information feedback provided by the embodiments of the present disclosure, the first information also includes at least one of: channel state information-reference signal resource indicator (CRI) information; wideband channel quality indicator (CQI); a numeric count of non-zero wideband amplitude coefficients; indication information of a numeric count of non-zero coefficients; indication information of a location of a non-zero coefficient; mode indication; or rank indication information.

In some embodiments, the first information may include the CRI information.

In some embodiments, the first information may include the wideband CQI.

In some embodiments, the first information may include the numeric count of non-zero wideband amplitude coefficients.

It can be understood that the numeric count of non-zero wideband amplitude coefficients means the number of wideband amplitude coefficient values that are non-zero.

In some embodiments, the first information may include the indication information of the numeric count of non-zero coefficients.

It can be understood that the indication information of the numeric count of non-zero coefficients can indicate the number of associated coefficients that are non-zero coefficients.

In some embodiments, the first information may include the indication information of a location of a non-zero coefficient.

It can be understood that the indication information of a location of a non-zero coefficient can indicate the location of the associated coefficient that is a non-zero coefficient.

In some embodiments, the first information may include the mode indication.

For example, the mode indication may be used to indicate a CSI feedback mode, a codebook mode, etc. The CSI feedback mode may include mode 1 and mode 2, in which mode 1 is feedback based on a single TRP, and mode 2 is feedback based on multi-TRP. Of course, the CSI feedback mode may also include other modes, which are not limited in the present disclosure. The codebook mode may include codebook structure 1 and codebook structure 2, in which codebook structure 1 is to feedback a piece of frequency domain basis (FD basis) information for all NZP CSI-RSs; codebook structure 2 is to feedback a piece of frequency domain basis information for each NZP CSI-RS. The codebook mode may also include other modes, which are not limited in the present disclosure.

In some embodiments, the first information may include the rank indication information.

According to the embodiments of the present disclosure, there is provided a variety of different first information included in the CSI, and the parameter information corresponding to at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the target NZP CSI-RS indication information includes N bits, where N is a numeric count of NZP CSI-RSs included in the target CMR. The N bits correspond one-to-one to the N NZP CSI-RSs. In response to a value of a bit being a specified value, it indicates that the NZP CSI-RS corresponding to the bit is the target NZP CSI-RS.

In some embodiments, the target NZP CSI-RS indication information in the first information may include N bits, where N is a positive integer. N represents a numeric count of NZP CSI-RSs included in the target CMR. The N bits in the target NZP CSI-RS indication information correspond one-to-one to the N NZP CSI-RSs included in the target CMR. That is, each bit may be used to describe whether the corresponding NZP CSI-RS is the target NZP CSI-RS. When the bit is a specified value, the NZP CSI-RS corresponding to the bit may be considered to be the target NZP CSI-RS.

For example, the specified value of the bit may be "0" or "1." Of course, the specified value may also be any other numerical value or symbol, which is not limited in the present disclosure.

It can be understood that the TRP corresponding to the determined target NZP CSI-RS is a TRP selected by the terminal for subsequent communication.

According to the embodiments of the present disclosure, the target NZP CSI-RS among the plurality of NZP CSI-RSs is indicated through the bit in the target NZP CSI-RS indication information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the target NZP CSI-RS indication information indicates through the N pieces of indication information of a numeric count of non-zero coefficients, where N is a numeric count of NZP CSI-RSs included in the target CMR. The N pieces of indication information of a numeric count of non-zero coefficients correspond one-to-one to the N NZP CSI-RSs. In response to the indication information of a numeric count of non-zero coefficients being a specified value, it indicates that the NZP CSI-RS corresponding to the indication information of a numeric count of non-zero coefficients is the target NZP CSI-RS.

In some embodiments, the target NZP CSI-RS indication information in the first information may implicitly indicate through the N pieces of indication information of a numeric count of non-zero coefficients, where N is a positive integer. N represents a numeric count of NZP CSI-RSs included in the target CMR. The N pieces of indication information of a numeric count of non-zero coefficients in the target NZP CSI-RS indication information correspond one-to-one to the N NZP CSI-RSs included in the target CMR. That is, each piece of indication information of a numeric count of non-zero coefficients may be used to describe whether the corresponding NZP CSI-RS is the target NZP CSI-RS. When the indication information of a numeric count of non-zero coefficients is a specified value, the NZP CSI-RS corresponding to the indication information of a numeric count of non-zero coefficients may be considered to be the target NZP CSI-RS.

For example, the indication information of a numeric count of non-zero coefficients being the specified value may be that, the number count indicated by the indication information of a numeric count of non-zero coefficients may be a value greater than 0. That is, it indicates that the NZP CSI-RS corresponding to the indication information of a numeric count of non-zero coefficients is the target NZP CSI-RS. Of course, any equivalent method may be used to determine the specified value of the indication information of a numeric count of non-zero coefficients, which is not limited in the present disclosure.

According to the embodiments of the present disclosure, the target NZP CSI-RS among the multiple NZP CSI-RSs can be indicated through the indication information of a numeric count of non-zero coefficients in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the target NZP CSI-RS indication information indicates through N pieces of indication information of a location of a non-zero coefficient, where N is a numeric count of NZP CSI-RSs included in the target CMR. The N pieces of indication information of a location of a non-zero coefficient correspond one-to-one to the N NZP CSI-RSs. In response to the indication information of a location of a non-zero coefficient being a specified value, it indicates that the NZP CSI-RS corresponding to the indication information of a location of a non-zero coefficient is the target NZP CSI-RS.

In some embodiments, the target NZP CSI-RS indication information in the first information may implicitly indicate through the N pieces of indication information of a location of a non-zero coefficient, where N is a positive integer. N represents a numeric count of NZP CSI-RSs included in the target CMR. The N pieces of indication information of a location of a non-zero coefficient in the target NZP CSI-RS indication information correspond one-to-one to the N NZP CSI-RSs included in the target CMR. That is, each piece of indication information of a location of a non-zero coefficient can be used to describe whether the corresponding NZP CSI-RS is the target NZP CSI-RS. When the indication information of a location of a non-zero coefficient is a specified value, the NZP CSI-RS corresponding to the indication information of a location of a non-zero coefficient may be considered to be the target NZP CSI-RS.

For example, the indication information of a location of a non-zero coefficient being the specified value may be that, the indication information of a location of a non-zero coefficient may indicate that there is at least one location where an associated coefficient is a non-zero coefficient. That is, the NZP CSI-RS corresponding to the indication information of a location of a non-zero coefficient is the target NZP CSI-RS. Of course, any equivalent method may be used to determine the specified value of the indication information of a location of a non-zero coefficient, which is not limited in the present disclosure.

In some embodiments, the indication information of a location of a non-zero coefficient may be implemented through a non-zero coefficient bitmap. For example, the non-zero coefficient bitmap corresponding to the NZP CSI-RS may indicate that the associated coefficient indication of this NZP CSI-RS is the specified value or 0. In response to the associated coefficient indication being the specified value, it indicates that the associated coefficient of the location is a non-zero coefficient; in response to the associated coefficient indication being 0, it indicates that the associated coefficient of the location is 0. It can be understood that the bitmap of the non-target NZP CSI-RS indicates that associated coefficients of this NZP CSI-RS are all 0. Only when the bitmap indicates that there is a non-zero coefficient, the corresponding NZP CSI-RS is considered to be the target NZP CSI-RS.

It can be understood that, for the target NZP CSI-RS, there is at least one coefficient being non-zero among its associated coefficients, that is, at least one non-zero coefficient, while the associated coefficients corresponding to the non-target NZP CSI-RS are all 0.

According to the embodiments of the present disclosure, the target NZP CSI-RS among the multiple NZP CSI-RSs can be indicated through the indication information of a location of a non-zero coefficient in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the second information includes precoding matrix indicator (PMI) information, and the PMI information may include at least one of: space domain (SD) basis parameter information; frequency domain (FD) basis parameter information; indication information of a location of a non-zero coefficient; phase coefficient information; or amplitude coefficient information.

In some embodiments, the second information may include the PMI information. The PMI information may be used to describe a precoding matrix used by an NZP CSI-RS in the target CMR for downlink multiple in multiple out (MIMO) spatial multiplexing.

In some embodiments, the PMI information may include the SD basis parameter information.

In some embodiments, the PMI information may include the FD basis parameter information.

In some embodiments, the PMI information may include the indication information of a location of a non-zero coefficient.

It can be understood that in response to the indication information of a location of a non-zero coefficient being used in the first information to implicitly indicate the target NZP CSI-RS indication information, the PMI information does not include the indication information of a location of a non-zero coefficient. In response to the indication information of a location of a non-zero coefficient not being used in the first information to implicitly indicate the target NZP CSI-RS indication information, the PMI information may include the indication information of a location of a non-zero coefficient.

In some embodiments, the PMI information may include the phase coefficient information.

In some embodiments, the PMI information may include the amplitude coefficient information.

According to the embodiments of the present disclosure, there is provided a variety of different information included in the second information of the CSI, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the second information includes PMI information corresponding to the target NZP CSI-RS.

In some embodiments, the second information may include the PMI information corresponding to the target NZP CSI-RS. Of course, the second information may also include or not include PMI information corresponding to the non-target NZP CSI-RS.

In some embodiments, in response to the second information including the PMI information corresponding to the non-target NZP CSI-RS, the PMI information corresponding to the non-target NZP CSI-RS may be a default value. For example, it may be 0 or any other equivalent value, and the specific default value is not limited in the present disclosure.

According to the embodiments of the present disclosure, through the PMI information corresponding to the target NZP CSI-RS included in the second information of the CSI, and thereby through the CSI, the parameter information corresponding to the at least one NZP CSI-RS, that is measured based on the CMR, is fed back, so that when the terminal communicates with the multi-TRP, the signaling overhead of the CSI reporting can be reduced.

In the method for channel state information feedback provided by the embodiments of the present disclosure, the second information does not include PMI information corresponding to an NZP CSI-RS other than the target NZP CSI-RS.

In some embodiments, the second information only includes the PMI information corresponding to the target NZP CSI-RS, but does not include the PMI information corresponding to an NZP CSI-RS other than the target NZP CSI-RS, that is, does not include PMI information corresponding to the non-target NZP CSI-RS.

In some embodiments, the second information not including the PMI information corresponding to the NZP CSI-RS other than the target NZP CSI-RS may be that, the second information does not include the SD basis parameter information, the FD basis parameter information, the phase coefficient information, and the amplitude coefficient information.

According to the embodiments of the present disclosure, the size of CSI is reduced by including only the PMI information corresponding to the target NZP CSI-RS, but not including the PMI information corresponding to the non-target NZP CSI-RS in the second information of the CSI. This reduces the signaling overhead of the CSI reporting when the terminal communicates with the multi-TRP.

In the method for channel state information feedback provided by the embodiments of the present disclosure, the space domain basis parameter information may include at least one of: oversampling information; or beam selection information.

In some embodiments, the SD basis parameter information may include the oversampling information.

For example, the oversampling information may correspond to O₁ information and O₂ information, in which the O₁ information is a first dimension oversampling factor, and O₂ information is a second dimension oversampling factor.

In some embodiments, the SD basis parameter information may include the beam selection information.

For example, the beam selection information corresponds to L beams selected from N1 and N2, in which N1 is a numeric count of antenna ports in the first dimension of the NZP CSI-RS, and N2 is a numeric count of antenna ports in the second dimension of the NZP CSI-RS.

According to the embodiments of the present disclosure, there is provided a variety of information included in the space domain basis parameter information, the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the frequency domain basis includes M frequency domain units determined from a plurality of frequency domain units for respective data layers, where M is a positive integer.

In some embodiments, the FD basis parameter information may be for respective data layers.

In some embodiments, the FD basis parameter information may select M frequency domain units from N3 frequency domain units, where M is a positive integer, N3 is a numeric count of subbands of the CQI multiplied by an R value, and the R value represents a numeric count of PMI subbands corresponding to a CQI subband.

According to the embodiments of the present disclosure, there is provided a variety of information included in the frequency domain basis parameter information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the phase coefficient information may include at least one of: wideband phase coefficient information; narrowband phase coefficient information; or phase coefficient information corresponding to an NZP CSI-RS.

In some embodiments, the phase coefficient information may include the wideband phase coefficient information.

In some embodiments, the phase coefficient information may include the narrowband phase coefficient information.

In some embodiments, the phase coefficient information may include the phase coefficient information corresponding to the NZP CSI-RS.

It can be understood that the phase coefficient information corresponding to the non-target NZP CSI-RS may not be indicated, or may be a default value, such as 0.

According to the embodiments of the present disclosure, there is provided a variety of information included in the phase coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the amplitude coefficient information may include at least one of: wideband amplitude coefficient information; narrowband amplitude coefficient information; or amplitude coefficient information corresponding to an NZP CSI-RS.

In some embodiments, the amplitude coefficient information may include the wideband amplitude coefficient information.

In some embodiments, the amplitude coefficient information may include the narrowband amplitude coefficient information.

In some embodiments, the amplitude coefficient information may include the amplitude coefficient information corresponding to the NZP CSI-RS.

It can be understood that the amplitude coefficient information corresponding to the non-target NZP CSI-RS may not be indicated, or may be a default value, such as 0.

According to the embodiments of the present disclosure, there is provided a variety of information included in the amplitude coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

Based on the same concept, the present disclosure also provides a method for channel state information feedback that is performed by a network device.

Fig. 3 is a flow chart of another method for channel state information feedback according to an exemplary embodiment. As shown in Fig. 3, the method is performed by a network device and may include the following steps.

In step S11, configuration information is sent to a terminal.

In some embodiments, the network device sends the configuration information to the terminal. The configuration information may be used by the terminal to determine at least one CMR. A target CMR of the at least one CMR includes a plurality of NZP CSI-RSs.

In some embodiments, the network device may send the configuration information through an RRC signaling and/or a MAC CE.

In step S12, a CSI sent by the terminal is received.

In some embodiments, the network device may receive the CSI sent by the terminal, in which the CSI is obtained by the terminal by performing channel measurement based on the target CMR.

It can be understood that the terminal may perform measurement based on at least one NZP CSI-RS among the plurality of NZP CSI-RSs included in the target CMR to obtain the CSI.

In some embodiments, the CSI may also be referred to as a CSI report.

According to the embodiments of the present disclosure, the parameter information corresponding to the at least one NZP CSI-RS, that is measured based on the CMR, is fed back in the CSI sent to the network device, so that when the terminal communicates with the multi-TRP, the signaling overhead of the CSI reporting can be reduced.

In the method for channel state information feedback provided by the embodiments of the present disclosure, the CSI includes: first information and second information. The first information and the second information are different indication information corresponding to the NZP CSI-RSs in the target CMR. The first information includes the target NZP CSI-RS indication information. The target NZP CSI-RS indication information is used to indicate that an NZP CSI-RS is a target NZP CSI-RS or a non-target NZP CSI-RS, and the one or more target NZP CSI-RSs are part or all of the plurality of NZP CSI-RSs.

In some embodiments, the CSI received by the network device may include the first information and the second information. For example, the CSI report may include two parts, namely part 1 and part 2. Part 1 may correspond to the first information, and part 2 may correspond to the second information. The first information and the second information are different indication information corresponding to the NZP CSI-RSs in the target CMR. It can be understood that the first information and the second information are both indication information for describing the NZP CSI-RSs in the target CMR, and the first information and the second information are different indication information.

In some embodiments, the first information may include the target NZP CSI-RS indication information. The target NZP CSI-RS indication information may be used to indicate that an NZP CSI-RS is a target NZP CSI-RS or a non-target NZP CSI-RS. The one or more target NZP CSI-RSs are part or all of the plurality of NZP CSI-RSs.

It can be understood that the target NZP CSI-RS is an NZP CSI-RS with channel quality meeting conditions and is determined by the terminal by performing channel measurement. That is, the terminal determines that the channel quality of such NZP CSI-RS is good and can communicate with a TRP corresponding to such NZP CSI-RS. The non-target NZP CSI-RS is an NZP CSI-RS with channel quality not meeting the conditions. It may be considered that the channel quality of such NZP CSI-RS is poor, which is not conducive to the terminal for communication.

In the embodiments of the present disclosure, the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, a size of an indication field corresponding to the second information is determined based on the first information.

In some embodiments, the size of the indication field corresponding to the second information may be determined based on the first information.

For example, the size of part 2 of the CSI is determined based on the information in part 1. The size of part 2 indicates a numeric count of bits occupied by part 2 of the CSI, such as 8 bits or 16 bits.

In some embodiments, the size of the indication field corresponding to the first information may be a fixed value, such as a pre-defined value or a default size specified by a protocol.

The present disclosure dynamically adjusts the size of different parts of the CSI, which is beneficial to feedback the parameter information corresponding to at least one NZP CSI-RS, so that when the terminal communicates with the multi-TRP, the signaling overhead of the CSI reporting can be reduced.

In the method for channel state information feedback provided by the embodiments of the present disclosure, the first information also includes at least one of: CRI information; wideband CQI; a numeric count of non-zero wideband amplitude coefficients; indication information of a numeric count of non-zero coefficients; indication information of a location of a non-zero coefficient; mode indication; or rank indication information.

In some embodiments, the first information may include the CRI information.

In some embodiments, the first information may include the wideband CQI.

In some embodiments, the first information may include the numeric count of non-zero wideband amplitude coefficients.

It can be understood that the numeric count of non-zero wideband amplitude coefficients means the number of wideband amplitude coefficient values that are non-zero.

In some embodiments, the first information may include the indication information of the numeric count of non-zero coefficients.

It can be understood that the indication information of the numeric count of non-zero coefficients can indicate the number of associated coefficients that are non-zero coefficients.

In some embodiments, the first information may include the indication information of a location of a non-zero coefficient.

It can be understood that the indication information of a location of a non-zero coefficient can indicate the location of the associated coefficient that is a non-zero coefficient.

In some embodiments, the first information may include the mode indication.

For example, the mode indication may be used to indicate a CSI feedback mode, a codebook mode, etc. The CSI feedback mode may include mode 1 and mode 2, in which mode 1 is feedback based on a single TRP, and mode 2 is feedback based on multi-TRP. Of course, the CSI feedback mode may also include other modes, which are not limited in the present disclosure. The codebook mode may include codebook structure 1 and codebook structure 2, in which codebook structure 1 is to feedback a piece of FD basis information for all NZP CSI-RSs; codebook structure 2 is to feedback a piece of frequency domain basis information for each NZP CSI-RS. The codebook mode may also include other modes, which are not limited in the present disclosure.

In some embodiments, the first information may include the rank indication information.

According to the embodiments of the present disclosure, there is provided a variety of different first information included in the CSI, and the parameter information corresponding to at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the target NZP CSI-RS indication information includes N bits, where N is a numeric count of NZP CSI-RSs included in the target CMR. The N bits correspond one-to-one to the N NZP CSI-RSs. In response to a value of a bit being a specified value, it indicates that the NZP CSI-RS corresponding to the bit is the target NZP CSI-RS.

In some embodiments, the target NZP CSI-RS indication information in the first information may include N bits, where N is a positive integer. N represents a numeric count of NZP CSI-RSs included in the target CMR. The N bits in the target NZP CSI-RS indication information correspond one-to-one to the N NZP CSI-RSs included in the target CMR. That is, each bit may be used to describe whether the corresponding NZP CSI-RS is the target NZP CSI-RS. When the bit is a specified value, the NZP CSI-RS corresponding to the bit may be considered to be the target NZP CSI-RS.

For example, the specified value of the bit may be "0" or "1." Of course, the specified value may also be any other numerical value or symbol, which is not limited in the present disclosure.

It can be understood that the TRP corresponding to the determined target NZP CSI-RS is a TRP selected by the terminal for subsequent communication.

According to the embodiments of the present disclosure, the target NZP CSI-RS among the plurality of NZP CSI-RSs is indicated through the bit in the target NZP CSI-RS indication information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the target NZP CSI-RS indication information indicates through N pieces of indication information of a numeric count of non-zero coefficients, where N is a numeric count of NZP CSI-RSs included in the target CMR. The N pieces of indication information of a numeric count of non-zero coefficients correspond one-to-one to the N NZP CSI-RSs. In response to the indication information of a numeric count of non-zero coefficients being a specified value, it indicates that the NZP CSI-RS corresponding to the indication information of a numeric count of non-zero coefficients is the target NZP CSI-RS.

In some embodiments, the target NZP CSI-RS indication information in the first information may implicitly indicate through the N pieces of indication information of a numeric count of non-zero coefficients, where N is a positive integer. N represents a numeric count of NZP CSI-RSs included in the target CMR. The N pieces of indication information of a numeric count of non-zero coefficients in the target NZP CSI-RS indication information correspond one-to-one to the N NZP CSI-RSs included in the target CMR. That is, each piece of indication information of a numeric count of non-zero coefficients may be used to describe whether the corresponding NZP CSI-RS is the target NZP CSI-RS. When the indication information of a numeric count of non-zero coefficients is a specified value, the NZP CSI-RS corresponding to the indication information of a numeric count of non-zero coefficients may be considered to be the target NZP CSI-RS.

For example, the indication information of a numeric count of non-zero coefficients being the specified value may be that, the number indicated by the indication information of a numeric count of non-zero coefficients may be a value greater than 0. That is, it indicates that the NZP CSI-RS corresponding to the indication information of a numeric count of non-zero coefficients is the target NZP CSI-RS. Of course, any equivalent method may be used to determine the specified value of the indication information of a numeric count of non-zero coefficients, which is not limited in the present disclosure.

According to the embodiments of the present disclosure, the target NZP CSI-RS among the multiple NZP CSI-RSs can be indicated through the indication information of a numeric count of non-zero coefficients in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the target NZP CSI-RS indication information indicates through N pieces of indication information of a location of a non-zero coefficient, where N is a numeric count of NZP CSI-RSs included in the target CMR. The N pieces of indication information of a location of a non-zero coefficient correspond one-to-one to the N NZP CSI-RSs. In response to the indication information of a location of a non-zero coefficient being a specified value, it indicates that the NZP CSI-RS corresponding to the indication information of a location of a non-zero coefficient is the target NZP CSI-RS.

In some embodiments, the target NZP CSI-RS indication information in the first information may implicitly indicate through the N pieces of indication information of a location of a non-zero coefficient, where N is a positive integer. N represents a numeric count of NZP CSI-RSs included in the target CMR. The N pieces of indication information of a location of a non-zero coefficient in the target NZP CSI-RS indication information correspond one-to-one to the N NZP CSI-RSs included in the target CMR. That is, each piece of indication information of a location of a non-zero coefficient can be used to describe whether the corresponding NZP CSI-RS is the target NZP CSI-RS. When the indication information of a location of a non-zero coefficient is a specified value, the NZP CSI-RS corresponding to the indication information of a location of a non-zero coefficient may be considered to be the target NZP CSI-RS.

For example, the indication information of a location of a non-zero coefficient being the specified value may be that, the indication information of a location of a non-zero coefficient may indicate that there is at least one location where an associated coefficient is a non-zero coefficient. That is, the NZP CSI-RS corresponding to the indication information of a location of a non-zero coefficient is the target NZP CSI-RS. Of course, any equivalent method may be used to determine the specified value of the indication information of a location of a non-zero coefficient, which is not limited in the present disclosure.

In some embodiments, the indication information of a location of a non-zero coefficient may be implemented through a non-zero coefficient bitmap. For example, the non-zero coefficient bitmap corresponding to the NZP CSI-RS may indicate that the associated coefficient indication of this NZP CSI-RS is the specified value or 0. In response to the associated coefficient indication being the specified value, it indicates that the associated coefficient of the location is a non-zero coefficient; in response to the associated coefficient indication being 0, it indicates that the associated coefficient of the location is 0. It can be understood that the bitmap of the non-target NZP CSI-RS indicates that associated coefficients of this NZP CSI-RS are all 0. Only when the bitmap indicates that there is a non-zero coefficient, the corresponding NZP CSI-RS is considered to be the target NZP CSI-RS.

It can be understood that, for the target NZP CSI-RS, there is at least one coefficient being non-zero among its associated coefficients, that is, at least one non-zero coefficient, while the associated coefficients corresponding to the non-target NZP CSI-RS are all 0.

According to the embodiments of the present disclosure, the target NZP CSI-RS among the multiple NZP CSI-RSs can be indicated through the indication information of a location of a non-zero coefficient in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the second information includes precoding matrix indicator (PMI) information, and the PMI information may include at least one of: SD basis parameter information; FD basis parameter information; indication information of a location of a non-zero coefficient; phase coefficient information; or amplitude coefficient information.

In some embodiments, the second information may include the PMI information. The PMI information may be used to describe a precoding matrix used by an NZP CSI-RS in the target CMR for downlink multiple in multiple out (MIMO) spatial multiplexing.

In some embodiments, the PMI information may include the SD basis parameter information.

In some embodiments, the PMI information may include the FD basis parameter information.

In some embodiments, the PMI information may include the indication information of a location of a non-zero coefficient.

It can be understood that in response to the indication information of a location of a non-zero coefficient being used in the first information to implicitly indicate the target NZP CSI-RS indication information, the PMI information does not include the indication information of a location of a non-zero coefficient. In response to the indication information of a location of a non-zero coefficient not being used in the first information to implicitly indicate the target NZP CSI-RS indication information, the PMI information may include the indication information of a location of a non-zero coefficient.

In some embodiments, the PMI information may include the phase coefficient information.

In some embodiments, the PMI information may include the amplitude coefficient information.

According to the embodiments of the present disclosure, there is provided a variety of different information included in the second information of the CSI, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the second information includes PMI information corresponding to the target NZP CSI-RS.

In some embodiments, the second information may include the PMI information corresponding to the target NZP CSI-RS. Of course, the second information may also include or not include PMI information corresponding to the non-target NZP CSI-RS.

In some embodiments, in response to the second information including the PMI information corresponding to the non-target NZP CSI-RS, the PMI information corresponding to the non-target NZP CSI-RS may be a default value. For example, it may be 0 or any other equivalent value, and the specific default value is not limited in the present disclosure.

According to the embodiments of the present disclosure, through the PMI information corresponding to the target NZP CSI-RS included in the second information of the CSI, and thereby through the CSI, the parameter information corresponding to the at least one NZP CSI-RS, that is measured based on the CMR, is fed back, so that when the terminal communicates with the multi-TRP, the signaling overhead of the CSI reporting can be reduced.

In the method for channel state information feedback provided by the embodiments of the present disclosure, the second information does not include PMI information corresponding to an NZP CSI-RS other than the target NZP CSI-RS.

In some embodiments, the second information only includes the PMI information corresponding to the target NZP CSI-RS, but does not include the PMI information corresponding to an NZP CSI-RS other than the target NZP CSI-RS, that is, does not include PMI information corresponding to the non-target NZP CSI-RS.

In some embodiments, the second information not including the PMI information corresponding to the NZP CSI-RS other than the target NZP CSI-RS may be that, the second information does not include the SD basis parameter information, the FD basis parameter information, the phase coefficient information, and the amplitude coefficient information.

According to the embodiments of the present disclosure, the size of CSI is reduced by including only the PMI information corresponding to the target NZP CSI-RS, but not including the PMI information corresponding to the non-target NZP CSI-RS in the second information of the CSI. This reduces the signaling overhead of the CSI reporting when the terminal communicates with the multi-TRP.

In the method for channel state information feedback provided by the embodiments of the present disclosure, the space domain basis parameter information may include at least one of: oversampling information; or beam selection information.

In some embodiments, the SD basis parameter information may include the oversampling information.

For example, the oversampling information may correspond to O₁ information and O₂ information, in which the O₁ information is a first dimension oversampling factor, and O₂ information is a second dimension oversampling factor.

In some embodiments, the SD basis parameter information may include the beam selection information.

For example, the beam selection information corresponds to L beams selected from N1 and N2, in which N1 is a numeric count of antenna ports in the first dimension of the NZP CSI-RS, and N2 is a numeric count of antenna ports in the second dimension of the NZP CSI-RS.

According to the embodiments of the present disclosure, there is provided a variety of information included in the space domain basis parameter information, the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the frequency domain basis includes M frequency domain units determined from a plurality of frequency domain units for respective data layers, where M is a positive integer.

In some embodiments, the FD basis parameter information may be for respective data layers.

In some embodiments, the FD basis parameter information may select M frequency domain units from N3 frequency domain units, where M is a positive integer, N3 is a numeric count of subbands of the CQI multiplied by an R value, and the R value represents a numeric count of PMI subbands corresponding to a CQI subband.

According to the embodiments of the present disclosure, there is provided a variety of information included in the frequency domain basis parameter information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the phase coefficient information may include at least one of: wideband phase coefficient information; narrowband phase coefficient information; or phase coefficient information corresponding to an NZP CSI-RS.

In some embodiments, the phase coefficient information may include the wideband phase coefficient information.

In some embodiments, the phase coefficient information may include the narrowband phase coefficient information.

In some embodiments, the phase coefficient information may include the phase coefficient information corresponding to the NZP CSI-RS.

It can be understood that the phase coefficient information corresponding to the non-target NZP CSI-RS may not be indicated, or may be a default value, such as 0.

According to the embodiments of the present disclosure, there is provided a variety of information included in the phase coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In the method for channel state information feedback provided by the embodiments of the present disclosure, the amplitude coefficient information may include at least one of: wideband amplitude coefficient information; narrowband amplitude coefficient information; or amplitude coefficient information corresponding to an NZP CSI-RS.

In some embodiments, the amplitude coefficient information may include the wideband amplitude coefficient information.

In some embodiments, the amplitude coefficient information may include the narrowband amplitude coefficient information.

In some embodiments, the amplitude coefficient information may include the amplitude coefficient information corresponding to the NZP CSI-RS.

It can be understood that the amplitude coefficient information corresponding to the non-target NZP CSI-RS may not be indicated, or may be a default value, such as 0.

According to the embodiments of the present disclosure, there is provided a variety of information included in the amplitude coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

It can be understood that the embodiments related to the network device described in Fig. 3 can refer to the description of the corresponding embodiments related to the terminal shown in Fig. 2, which will not be repeated in the present disclosure.

It should be noted that those skilled in the art can understand that the various implementations/embodiments involved in the present disclosure can be used in conjunction with the aforementioned embodiments or can be used independently. Whether used alone or in conjunction with the aforementioned embodiments, the implementation principle is similar. In the embodiments of the present disclosure, some embodiments are described in terms of implementations used together. Of course, those skilled in the art can understand that such examples are not limitations of the embodiments of the present disclosure.

Based on the same concept, the embodiments of the present disclosure also provide an apparatus and a device for channel state information feedback.

It can be understood that the apparatus and the device for channel state information feedback provided by the embodiments of the present disclosure include hardware structures and/or software modules corresponding to the execution of respective functions in order to realize the above functions. In combination with the units and algorithm steps of each example disclosed in the embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to exceed the scope of the technical solution of the embodiments of the present disclosure.

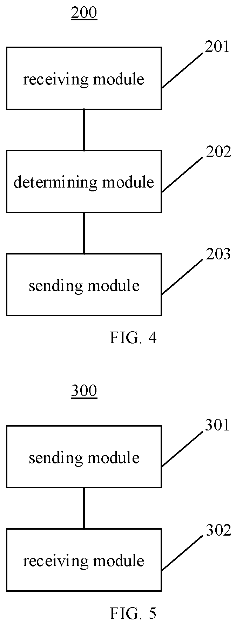

Fig. 4 is a schematic diagram of an apparatus for channel state information feedback according to an exemplary embodiment. Referring to Fig. 4, the apparatus 200 is configured in a terminal, and includes: a receiving module 201, configured to receive configuration information sent by a network device; a determining module 202, configured to determine at least one CMR based on the configuration information, in which a target CMR of the at least one CMR includes a plurality of NZP CSI-RSs; and a sending module 203, configured to send a CSI to the network device, in which the CSI is obtained by the terminal by performing channel measurement based on the target CMR.

According to the embodiments of the present disclosure, the parameter information corresponding to the at least one NZP CSI-RS, that is measured based on the CMR, is fed back in the CSI sent to the network device, so that when the terminal communicates with the multi-TRP, the signaling overhead of the CSI reporting can be reduced.

In some implementations, the CSI includes: first information and second information, in which the first information and the second information are different indication information corresponding to the NZP CSI-RSs in the target CMR. The first information includes target NZP CSI-RS indication information, the target NZP CSI-RS indication information being used to indicate that an NZP CSI-RS is a target NZP CSI-RS or a non-target NZP CSI-RS, and at least one target NZP CSI-RS is part or all of the plurality of NZP CSI-RSs.

According to the embodiments of the present disclosure, the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the size of the indication field corresponding to the second information is determined based on the first information.

The present disclosure dynamically adjusts the size of different parts of the CSI, which is beneficial to feedback the parameter information corresponding to at least one NZP CSI-RS, so that when the terminal communicates with the multi-TRP, the signaling overhead of the CSI reporting can be reduced.

In some implementations, the first information also includes at least one of: CRI information; wideband CQI; a numeric count of non-zero wideband amplitude coefficients; indication information of a numeric count of non-zero coefficients; indication information of a location of a non-zero coefficient; mode indication; or rank indication information.

According to the embodiments of the present disclosure, there is provided a variety of different first information included in the CSI, and the parameter information corresponding to at least one NZP CSI-RS, that is measured based on the CMR, is fed back through the CSI, so that when the terminal communicates with the multi-TRP, the signaling overhead of the CSI reporting can be reduced.

In some implementations, the target NZP CSI-RS indication information includes N bits. N is a numeric count of NZP CSI-RSs included in the target CMR. The N bits correspond one-to-one to the N NZP CSI-RSs. In response to a bit being a specified value, the NZP CSI-RS corresponding to the bit is the target NZP CSI-RS.

According to the embodiments of the present disclosure, the target NZP CSI-RS among the plurality of NZP CSI-RSs is indicated through the bit in the target NZP CSI-RS indication information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the target NZP CSI-RS indication information indicates through N pieces of indication information of a numeric count of non-zero coefficients, where N is a numeric count of NZP CSI-RSs included in the target CMR. The N pieces of indication information of a numeric count of non-zero coefficients correspond one-to-one to the N NZP CSI-RSs. In response to the indication information of a numeric count of non-zero coefficients being a specified value, it indicates that the NZP CSI-RS corresponding to the indication information of a numeric count of non-zero coefficients is the target NZP CSI-RS.

According to the embodiments of the present disclosure, the target NZP CSI-RS among the multiple NZP CSI-RSs can be indicated through the indication information of a numeric count of non-zero coefficients in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the target NZP CSI-RS indication information indicates through N pieces of indication information of a location of a non-zero coefficient, where N is a numeric count of NZP CSI-RSs included in the target CMR. The N pieces of indication information of a location of a non-zero coefficient correspond one-to-one to the N NZP CSI-RSs. In response to the indication information of a location of a non-zero coefficient being a specified value, it indicates that the NZP CSI-RS corresponding to the indication information of a location of a non-zero coefficient is the target NZP CSI-RS.

According to the embodiments of the present disclosure, the target NZP CSI-RS among the multiple NZP CSI-RSs can be indicated through the indication information of a location of a non-zero coefficient in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the second information includes PMI information. The PMI information includes at least one of: space domain basis parameter information; frequency domain basis parameter information; indication information of a location of a non-zero coefficient; phase coefficient information; or amplitude coefficient information.

According to the embodiments of the present disclosure, there is provided a variety of different information included in the second information of the CSI, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the second information includes PMI information corresponding to the target NZP CSI-RS.

According to the embodiments of the present disclosure, through the PMI information corresponding to the target NZP CSI-RS included in the second information of the CSI, and thereby through the CSI, the parameter information corresponding to the at least one NZP CSI-RS, that is measured based on the CMR, is fed back, so that when the terminal communicates with the multi-TRP, the signaling overhead of the CSI reporting can be reduced.

In some implementations, the second information does not include PMI information corresponding to an NZP CSI-RS other than the target NZP CSI-RS.

According to the embodiments of the present disclosure, the size of CSI is reduced by including only the PMI information corresponding to the target NZP CSI-RS, but not including the PMI information corresponding to the non-target NZP CSI-RS in the second information of the CSI, so that when the terminal communicates with the multi-TRP, the signaling overhead of the CSI reporting is reduced.

In some implementations, the space domain basis parameter information includes at least one of: oversampling information; or beam selection information.

According to the embodiments of the present disclosure, there is provided a variety of information included in the space domain basis parameter information, the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the frequency domain basis includes M frequency domain units determined from a plurality of frequency domain units for respective data layers, where M is a positive integer.

According to the embodiments of the present disclosure, there is provided a variety of information included in the frequency domain basis parameter information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the phase coefficient information includes at least one of: wideband phase coefficient information; narrowband phase coefficient information; or phase coefficient information corresponding to an NZP CSI-RS.

According to the embodiments of the present disclosure, there is provided a variety of information included in the phase coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the amplitude coefficient information includes at least one of: wideband amplitude coefficient information; narrowband amplitude coefficient information; or amplitude coefficient information corresponding to an NZP CSI-RS.

According to the embodiments of the present disclosure, there is provided a variety of information included in the amplitude coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

Fig. 5 is a schematic diagram of another apparatus for channel state information feedback according to an exemplary embodiment. Referring to Fig. 5, the apparatus 300 is configured in a network device, and includes: a sending module 301, configured to send configuration information to a terminal, the configuration information being used by the terminal to determine at least one CMR, in which a target CMR of the at least one CMR includes a plurality of NZP CSI-RSs; a receiving module 302, configured to receive a CSI sent by the terminal, the CSI being obtained by the terminal by performing channel measurement based on the target CMR.

According to the embodiments of the present disclosure, the parameter information corresponding to the at least one NZP CSI-RS, that is measured based on the CMR, is fed back in the CSI sent to the network device, so that when the terminal communicates with the multi-TRP, the signaling overhead of the CSI reporting can be reduced.

In some implementations, the CSI includes: first information and second information, in which the first information and the second information are different indication information corresponding to the NZP CSI-RSs in the target CMR. The first information includes target NZP CSI-RS indication information, the target NZP CSI-RS indication information being used to indicate that an NZP CSI-RS is a target NZP CSI-RS or a non-target NZP CSI-RS, and at least one target NZP CSI-RS is part or all of the plurality of NZP CSI-RSs.

According to the embodiments of the present disclosure, the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the size of the indication field corresponding to the second information is determined based on the first information.

The present disclosure dynamically adjusts the size of different parts of the CSI, which is beneficial to feedback the parameter information corresponding to at least one NZP CSI-RS, so that when the terminal communicates with the multi-TRP, the signaling overhead of the CSI reporting can be reduced.

In some implementations, the first information also includes at least one of: CRI information; wideband CQI; a numeric count of non-zero wideband amplitude coefficients; indication information of a numeric count of non-zero coefficients; indication information of a location of a non-zero coefficient; mode indication; or rank indication information.

According to the embodiments of the present disclosure, there is provided a variety of different first information included in the CSI, and the parameter information corresponding to at least one NZP CSI-RS, that is measured based on the CMR, is fed back through the CSI, so that when the terminal communicates with the multi-TRP, the signaling overhead of the CSI reporting can be reduced.

In some implementations, the target NZP CSI-RS indication information includes N bits. N is a numeric count of NZP CSI-RSs included in the target CMR. The N bits correspond one-to-one to the N NZP CSI-RSs. In response to a bit being a specified value, the NZP CSI-RS corresponding to the bit is the target NZP CSI-RS.

According to the embodiments of the present disclosure, the target NZP CSI-RS among the plurality of NZP CSI-RSs is indicated through the bit in the target NZP CSI-RS indication information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the target NZP CSI-RS indication information indicates through N pieces of indication information of a numeric count of non-zero coefficients, where N is a numeric count of NZP CSI-RSs included in the target CMR. The N pieces of indication information of a numeric count of non-zero coefficients correspond one-to-one to the N NZP CSI-RSs. In response to the indication information of a numeric count of non-zero coefficients being a specified value, it indicates that the NZP CSI-RS corresponding to the indication information of a numeric count of non-zero coefficients is the target NZP CSI-RS.

According to the embodiments of the present disclosure, the target NZP CSI-RS among the multiple NZP CSI-RSs can be indicated through the indication information of a numeric count of non-zero coefficients in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the target NZP CSI-RS indication information indicates through N pieces of indication information of a location of a non-zero coefficient, where N is a numeric count of NZP CSI-RSs included in the target CMR. The N pieces of indication information of a location of a non-zero coefficient correspond one-to-one to the N NZP CSI-RSs. In response to the indication information of a location of a non-zero coefficient being a specified value, it indicates that the NZP CSI-RS corresponding to the indication information of a location of a non-zero coefficient is the target NZP CSI-RS.

According to the embodiments of the present disclosure, the target NZP CSI-RS among the multiple NZP CSI-RSs can be indicated through the indication information of a location of a non-zero coefficient in the target NZP CSI-RS indication information. The parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the second information includes PMI information. The PMI information includes at least one of: space domain basis parameter information; frequency domain basis parameter information; indication information of a location of a non-zero coefficient; phase coefficient information; or amplitude coefficient information.

According to the embodiments of the present disclosure, there is provided a variety of different information included in the second information of the CSI, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the second information includes PMI information corresponding to the target NZP CSI-RS.

According to the embodiments of the present disclosure, through the PMI information corresponding to the target NZP CSI-RS included in the second information of the CSI, and thereby through the CSI, the parameter information corresponding to the at least one NZP CSI-RS, that is measured based on the CMR, is fed back, so that when the terminal communicates with the multi-TRP, the signaling overhead of the CSI reporting can be reduced.

In some implementations, the second information does not include PMI information corresponding to an NZP CSI-RS other than the target NZP CSI-RS.

According to the embodiments of the present disclosure, the size of CSI is reduced by including only the PMI information corresponding to the target NZP CSI-RS, but not including the PMI information corresponding to the non-target NZP CSI-RS in the second information of the CSI, so that when the terminal communicates with the multi-TRP, the signaling overhead of the CSI reporting is reduced.

In some implementations, the space domain basis parameter information includes at least one of: oversampling information; or beam selection information.

According to the embodiments of the present disclosure, there is provided a variety of information included in the space domain basis parameter information, the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the frequency domain basis includes M frequency domain units determined from a plurality of frequency domain units for respective data layers, where M is a positive integer.

According to the embodiments of the present disclosure, there is provided a variety of information included in the frequency domain basis parameter information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the phase coefficient information includes at least one of: wideband phase coefficient information; narrowband phase coefficient information; or phase coefficient information corresponding to an NZP CSI-RS.

According to the embodiments of the present disclosure, there is provided a variety of information included in the phase coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

In some implementations, the amplitude coefficient information includes at least one of: wideband amplitude coefficient information; narrowband amplitude coefficient information; or amplitude coefficient information corresponding to an NZP CSI-RS.

According to the embodiments of the present disclosure, there is provided a variety of information included in the amplitude coefficient information, and the parameter information corresponding to the at least one NZP CSI-RS, that is measured based on the CMR, is fed back through the CSI, so that when the terminal communicates with the multi-TRP, the signaling overhead of the CSI reporting can be reduced.

Regarding the apparatus 200 and the apparatus 300 in the above embodiments, the specific manner in which each module performs operations has been described in detail in the embodiments of the methods, and will not be elaborated here.

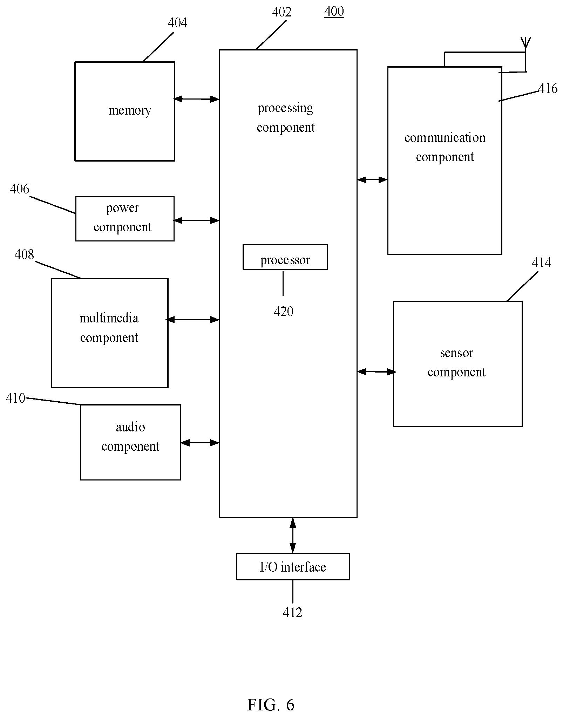

Fig. 6 is a schematic diagram of a device for channel state information feedback according to an exemplary embodiment. For example, the device 400 may be any terminal, such as a mobile phone, a computer, a digital broadcast terminal, a messaging device, a game console, a tablet device, a medical device, a fitness device, a personal digital assistant, etc.

Referring to Fig. 6, the device 400 may include one or more of: a processing component 402, a memory 404, a power component 406, a multimedia component 408, an audio component 410, an input/output (I/O) interface 412, and a sensor component 414, and a communication component 416.

The processing component 402 generally controls the overall operations of the device 400, such as operations associated with display, phone calls, data communications, camera operations, and recording operations. The processing component 402 may include one or more processors 44 to execute instructions to complete all or part of the steps of the above method. Additionally, the processing component 402 may include one or more modules that facilitate interaction between processing component 402 and other components. For example, the processing component 402 may include a multimedia module to facilitate interaction between the multimedia component 408 and the processing component 402.

The memory 404 is configured to store various types of data to support operations at the device 400. Examples of such data include instructions for any application or method operating on the device 400, contact data, phonebook data, messages, pictures, videos, etc. The memory 404 may be implemented by any type of volatile or non-volatile storage device, or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power supplies, and other components associated with generating, managing, and distributing power to the device 400.

The multimedia component 408 includes a screen that provides an output interface between the device 400 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In some embodiments, the multimedia component 408 includes a front-facing camera and/or a rear-facing camera. When the device 400 is in an operating mode, such as a shooting mode or a video mode, the front camera and/or the rear camera may receive external multimedia data. Each front-facing camera and rear-facing camera may be a fixed optical lens system or have a focal length and optical zoom capabilities.

The audio component 410 is configured to output and/or input an audio signal. For example, the audio component 410 includes a microphone (MIC) configured to receive the external audio signal when the device 400 is in an operating mode, such as a call mode, a recording mode, and a speech recognition mode. The received audio signal may be further stored in the memory 404 or sent via the communication component 416. In some embodiments, the audio component 410 also includes a speaker for outputting audio signals.

The I/O interface 412 provides an interface between the processing component 402 and a peripheral interface module. The peripheral interface module may be a keyboard, a click wheel, a button, etc. These button may include, but is not limited to: a home button, a volume button, a start button, and a lock button.

The sensor component 414 includes one or more sensors that provide various aspects of status assessment for the device 400. For example, the sensor component 414 may detect the open/closed state of the device 400, the relative positioning of components, such as a display and a keypad of the device 400, the sensor component 414 may also detect a position change of the device 400 or a component of the device 400, presence or absence of user contact with the device 400, an orientation or an acceleration/deceleration of the device 400, and a temperature change of the device 400. The sensor component 414 may include a proximity sensor configured to detect presence of nearby objects without any physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 may access a wireless network based on a communication standard, such as WiFi, 2G, or 3G, or their combination. In an exemplary embodiment, the communication component 416 receives a broadcast signal or broadcast related information from an external broadcast management system via a broadcast channel. In an exemplary embodiment, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the device 400 may be configured by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components used to perform the above methods.

In an exemplary embodiment, there is also provided a non-transitory computer-readable storage medium including instructions, such as the memory 404 including instructions. The instructions can be executed by the processor 420 of the device 400 to perform the above methods. For example, the non-transitory computer-readable storage medium may be a ROM, a random access memory (RAM), a CD-ROM, a magnetic tape, a floppy disk, an optical data storage device, etc.

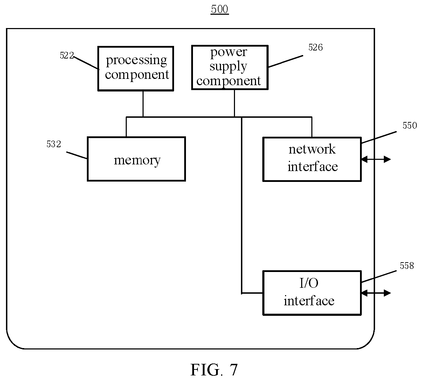

FIG7 is a schematic diagram of another device for channel state information feedback according to an exemplary embodiment. For example, device 500 may be provided as a base station, or a server. Referring to Fig. 7, the network device 500 includes a processing component 522, which further includes at least one processor, and a memory resource represented by a memory 532 for storing instructions executable by the processing component 522, such as an application. The application stored in the memory 532 may include one or more modules, each of which corresponds to a set of instructions. In addition, the processing component 522 is configured to execute instructions to perform any methods.

The network device 500 may further include a power supply component 526 configured to perform power management of the network device 500, a wired or wireless network interface 550 configured to connect the network device 500 to a network, and an input/output (I/O) interface 558. The network device 500 may operate based on an operating system stored in the memory 532, such as Windows Server^{™}, Mac OS X^{™}, Unix^{™}, Linux^{™}, FreeBSD^{™} or the like.

In an embodiment, such as shown in Fig. 1, the present disclosure further provides a communication system, which includes a terminal and a network device. The terminal is configured to perform any method for channel state information feedback described in Fig. 2; and the network device is configured to perform any method for channel state information feedback described in Fig. 3.

In the present disclosure, when a terminal communicates with the multi-TRP or multi-remote radio head (RRH), the above-mentioned CSI reporting method is used to improve the multi-TRP-based transmission performance while reducing the signaling overhead of the CSI reporting.

It is further understood that in the present disclosure, "a plurality of" refers to two or more than two, and other quantifiers are similar thereto. The term "and/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a", "an", and "the" are also intended to include plural forms, unless the context clearly indicates other meanings.

It is further understood that the terms "first", "second", etc., are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It is further understood that the meanings of the terms "in response to" and "if" involved in the present disclosure depend on the context and the actual usage scenarios. For example, the word "in response to" used herein can be interpreted as "when", or "if", or "in a case that".

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the present disclosure after considering the specification and practicing the present disclosure. The present disclosure is intended to cover any modifications, uses or adaptations of the present disclosure, which follow the general principles of the present disclosure and include common knowledge or customary technical means in the art that are not disclosed in the present disclosure.

It should be understood that the present disclosure is not limited to the precise structures that have been described above and shown in the drawings, and that various modifications and changes may be made without departing from the scope thereof. The scope of the present disclosure is limited only by the scope of the appended claims.

## Claims

1. A method for channel state information feedback, performed by a terminal, comprising:
receiving configuration information sent by a network device, and determining at least one channel measurement resource (CMR) based on the configuration information, wherein a target CMR of the at least one CMR comprises a plurality of non-zero-power channel state information reference signals (NZP CSI-RSs); and
sending channel state information (CSI) to the network device, the CSI being obtained by the terminal by performing channel measurement based on the target CMR.

2. The method according to claim 1, wherein the CSI comprises: first information and second information, wherein the first information and the second information are different indication information corresponding to the NZP CSI-RSs in the target CMR;
the first information comprises target NZP CSI-RS indication information, the target NZP CSI-RS indication information being used to indicate that an NZP CSI-RS is a target NZP CSI-RS or a non-target NZP CSI-RS, and at least one target NZP CSI-RS is part or all of the plurality of NZP CSI-RSs.

3. The method according to claim 2, wherein a size of an indication field corresponding to the second information is determined based on the first information.

4. The method according to claim 2 or 3, wherein the first information further comprises at least one of:
channel state information-reference signal resource indicator (CRI) information;
wideband channel quality indicator (CQI);
a numeric count of non-zero wideband amplitude coefficients;
indication information of a numeric count of non-zero coefficients;
indication information of a location of a non-zero coefficient;
mode indication; or
rank indication information.

5. The method according to any one of claims 2 to 4, wherein the target NZP CSI-RS indication information comprises N bits, where N is a numeric count of NZP CSI-RSs comprised in the target CMR, wherein the N bits correspond one-to-one to the N NZP CSI-RSs; and
in response to a value of a bit being a specified value, it indicates that the NZP CSI-RS corresponding to the bit is the target NZP CSI-RS.

6. The method according to any one of claims 2 to 4, wherein the target NZP CSI-RS indication information indicates through N pieces of indication information of a numeric count of non-zero coefficients, where N is a numeric count of NZP CSI-RSs comprised in the target CMR, wherein the N pieces of indication information of a numeric count of non-zero coefficients correspond one-to-one to the N NZP CSI-RSs; and
in response to the indication information of a numeric count of non-zero coefficients being a specified value, it indicates that the NZP CSI-RS corresponding to the indication information of a numeric count of non-zero coefficients is the target NZP CSI-RS.

7. The method according to any one of claims 2 to 4, wherein the target NZP CSI-RS indication information indicates through N pieces of indication information of a location of a non-zero coefficient, where N is a numeric count of NZP CSI-RSs comprised in the target CMR, wherein the N pieces of indication information of a location of a non-zero coefficient correspond one-to-one to the N NZP CSI-RSs; and
in response to the indication information of a location of a non-zero coefficient being a specified value, it indicates that the NZP CSI-RS corresponding to the indication information of a location of a non-zero coefficient is the target NZP CSI-RS.

8. The method according to any one of claims 2 to 7, wherein the second information comprises precoding matrix indicator (PMI) information, and the PMI information comprises at least one of:
space domain basis parameter information;
frequency domain basis parameter information;
indication information of a location of a non-zero coefficient;
phase coefficient information; or
amplitude coefficient information.

9. The method according to claim 8, wherein the second information comprises PMI information corresponding to the target NZP CSI-RS.

10. The method according to claim 8 or 9, wherein the second information does not comprise PMI information corresponding to an NZP CSI-RS other than the target NZP CSI-RS.

11. The method according to claim 8, wherein the space domain basis parameter information comprises at least one of:
oversampling information; or
beam selection information.

12. The method according to claim 8, wherein the frequency domain basis parameter information comprises M frequency domain units determined from a plurality of frequency domain units for respective data layers, where M is a positive integer.

13. The method according to claim 8, wherein the phase coefficient information comprises at least one of:
wideband phase coefficient information;
narrowband phase coefficient information; or
phase coefficient information corresponding to an NZP CSI-RS.

14. The method according to claim 8, wherein the amplitude coefficient information comprises at least one of:
wideband amplitude coefficient information;
narrowband amplitude coefficient information; or
amplitude coefficient information corresponding to an NZP CSI-RS.

15. A method for channel state information feedback, performed by a network device, comprising:
sending configuration information to a terminal, the configuration information being used by the terminal to determine at least one channel measurement resource (CMR), wherein a target CMR of the at least one CMR comprises a plurality of non-zero-power channel state information reference signals (NZP CSI-RSs); and
receiving channel state information (CSI) sent by the terminal, the CSI being obtained by the terminal by performing channel measurement based on the target CMR.

16. The method according to claim 15, wherein the CSI comprises: first information and second information, wherein the first information and the second information are different indication information corresponding to the NZP CSI-RSs in the target CMR;
the first information comprises target NZP CSI-RS indication information, the target NZP CSI-RS indication information being used to indicate that an NZP CSI-RS is a target NZP CSI-RS or a non-target NZP CSI-RS, and at least one target NZP CSI-RS is part or all of the plurality of NZP CSI-RSs.

17. The method according to claim 16, wherein a size of an indication field corresponding to the second information is determined based on the first information.

18. The method according to claim 16 or 17, wherein the first information further comprises at least one of:
channel state information-reference signal resource indicator (CRI) information;
wideband channel quality indicator (CQI);
a numeric count of non-zero wideband amplitude coefficients;
indication information of a numeric count of non-zero coefficients;
indication information of a location of a non-zero coefficient;
mode indication; or
rank indication information.

19. The method according to any one of claims 16 to 18, wherein the target NZP CSI-RS indication information comprises N bits, where N is a numeric count of NZP CSI-RSs comprised in the target CMR, wherein the N bits correspond one-to-one to the N NZP CSI-RSs; and
in response to a value of a bit being a specified value, it indicates that the NZP CSI-RS corresponding to the bit is the target NZP CSI-RS.

20. The method according to any one of claims 16 to 18, wherein the target NZP CSI-RS indication information indicates through N pieces of indication information of a numeric count of non-zero coefficients, where N is a numeric count of NZP CSI-RSs comprised in the target CMR, wherein the N pieces of indication information of a numeric count of non-zero coefficients correspond one-to-one to the N NZP CSI-RSs; and
in response to the indication information of a numeric count of non-zero coefficients being a specified value, it indicates that the NZP CSI-RS corresponding to the indication information of a numeric count of non-zero coefficients is the target NZP CSI-RS.

21. The method according to any one of claims 16 to 18, wherein the target NZP CSI-RS indication information indicates through N pieces of indication information of a location of a non-zero coefficient, where N is a numeric count of NZP CSI-RSs comprised in the target CMR, wherein the N pieces of indication information of a location of a non-zero coefficient correspond one-to-one to the N NZP CSI-RSs; and
in response to the indication information of a location of a non-zero coefficient being a specified value, it indicates that the NZP CSI-RS corresponding to the indication information of a location of a non-zero coefficient is the target NZP CSI-RS.

22. The method according to any one of claims 16 to 21, wherein the second information comprises precoding matrix indicator (PMI) information, and the PMI information comprises at least one of:
space domain basis parameter information;
frequency domain basis parameter information;
indication information of a location of a non-zero coefficient;
phase coefficient information; or
amplitude coefficient information.

23. The method according to claim 22, wherein the second information comprises PMI information corresponding to the target NZP CSI-RS.

24. The method according to claim 22 or 23, wherein the second information does not comprise PMI information corresponding to an NZP CSI-RS other than the target NZP CSI-RS.

25. The method according to claim 22, wherein the space domain basis parameter information comprises at least one of:
oversampling information; or
beam selection information.

26. The method according to claim 22, wherein the frequency domain basis parameter information comprises M frequency domain units determined from a plurality of frequency domain units for respective data layers, where M is a positive integer.

27. The method according to claim 22, wherein the phase coefficient information comprises at least one of:
wideband phase coefficient information;
narrowband phase coefficient information; or
phase coefficient information corresponding to an NZP CSI-RS.

28. The method according to claim 22, wherein the amplitude coefficient information comprises at least one of:
wideband amplitude coefficient information;
narrowband amplitude coefficient information; or
amplitude coefficient information corresponding to an NZP CSI-RS.

29. An apparatus for channel state information feedback, configured in a terminal, comprising:
a receiving module, configured to receive configuration information sent by a network device;
a determining module, configured to determine at least one channel measurement resource (CMR) based on the configuration information, wherein a target CMR of the at least one CMR comprises a plurality of non-zero-power channel state information reference signals (NZP CSI-RSs); and
a sending module, configured to send channel state information (CSI) to the network device, the CSI being obtained by the terminal by performing channel measurement based on the target CMR.

30. An apparatus for channel state information feedback, configured in a network device, comprising:
a sending module, configured to send configuration information to a terminal, the configuration information being used by the terminal to determine at least one channel measurement resource (CMR), wherein a target CMR of the at least one CMR comprises a plurality of non-zero-power channel state information reference signals (NZP CSI-RSs);
a receiving module, configured to receive channel state information (CSI) sent by the terminal, the CSI being obtained by the terminal by performing channel measurement based on the target CMR.

31. A device for channel state information feedback, comprising:
a processor; and
a memory for storing instructions executable by the processor;
wherein the processor is configured to perform the method according to any one of claims 1 to 14.

32. A device for channel state information feedback, comprising:
a processor; and
a memory for storing instructions executable by the processor;
wherein the processor is configured to perform the method according to any one of claims 15 to 28.

33. A storage medium, wherein instructions are stored in the storage medium, and when the instructions in the storage medium are executed by a processor of a terminal, the terminal is enabled to perform the method according to any one of claims 1 to 14.

34. A storage medium, wherein instructions are stored in the storage medium, and when the instructions in the storage medium are executed by a processor of a network device, the network device is enabled to perform the method according to any one of claims 15 to 28.

35. A communication system, comprising a terminal and a network device, wherein:
the terminal is configured to perform the method according to any one of claims 1 to 14; and
the network device is configured to perform the method according to any one of claims 15 to 28.
